(19) Europäisches Patentamt
European Patent Office
Office européen des brevets

(11) **EP 1 730 445 B1**

(12) **EUROPÄISCHE PATENTSCHRIFT**

(45) Veröffentlichungstag und Bekanntmachung des Hinweises auf die Patenterteilung:
**13.05.2009 Patentblatt 2009/20**

(21) Anmeldenummer: **05729597.4**

(22) Anmeldetag: **24.03.2005**

(51) Int Cl.:
*F02C 9/46* *(2006.01)*

(86) Internationale Anmeldenummer:
**PCT/EP2005/051367**

(87) Internationale Veröffentlichungsnummer:
**WO 2005/095860 (13.10.2005 Gazette 2005/41)**

(54) **Verfahren zum Betreiben einer Wärmekraftmaschine, Vorzugsweise einer Gasturbinenanlage**

Method for operating a heat engine, preferably a gas turbine installation

Procédé de fonctionnement d'un moteur thermique, en particulier un installation de turbine à gaz

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **31.03.2004 CH 557042004**

(43) Veröffentlichungstag der Anmeldung:
**13.12.2006 Patentblatt 2006/50**

(73) Patentinhaber: **Alstom Technology Ltd**
**5400 Baden (CH)**

(72) Erfinder: **Socher, Bernd**
**CH-5079 Zeihen/AG (CH)**

(56) Entgegenhaltungen:
**DE-A- 4 211 681      DE-C- 846 038**

EP 1 730 445 B1

## Beschreibung

### Technisches Gebiet

Die Erfindung bezieht sich auf ein Verfahren zum Betreiben einer Wärmekraftmaschine, vorzugsweise einer Gasturbinenanlage, bei der durch Befeuerung einer Brennkammer Heißgase entstehen, deren kinetische Strömungsenergie zumindest teilweise bei Durchströmen einer Rotationsmaschine in Rotationsenergie und letztlich durch eine mit der Rotationsmaschine verbundenen Generatoranordnung in elektrische Energie zur Einspeisung in ein Stromnetz umgewandelt wird.

Sowohl aus Sicherheitsgründen aber ebenso auch aus wirtschaftlichen Erwägungen gilt es eine insbesondere zur Erzeugung elektrischer Energie konzipierte Wärmekraftmaschine zuverlässig zu betreiben, so dass ein schneller und stets präsenter Abruf von elektrischer Energie durch den Netzbetreiber von der Wärmekraftmaschine gewährleistet werden kann. Wie bereits vorstehend erwähnt, stehen Gasturbinenanlagen im Mittelpunkt der weiteren Betrachtungen, zumal derartige Wärmkraftmaschinen im Bereich der Stromerzeugung bereits weit verbreitet sind. Gasturbinenanlagen werden in den meisten Fällen mit gasförmigen Brennstoff befeuert, der über geeignete Gasleitungen zur Verbrennung der Gasturbinenanlage bereitgestellt wird.

Besondere Beachtung bei einer mit gasförmigen Brennstoff betriebenen Gasturbinenanlage kommt dem Druckverhältnis zwischen dem sich innerhalb der Brennkammer in Abhängigkeit des Lastzustandes der Gasturbinenanlage im Wege der Verdichtung der Verbrennungszuluft einstellenden Systemdruck sowie dem Gasleitungsdruck zu, mit dem der gasförmige Brennstoff dem Verbrennungsvorgang zugeführt wird. Unter normalen Betriebsbedingungen ist der Gasleitungsdruck stets größer als der lastabhängige Brennkammerdruck. In Fällen, in denen der Gasleitungsdruck des zugeführten Brennstoffes in den Bereich des lastabhängigen Brennkammerdruckes abfällt, gilt es besonders dafür Sorge zu tragen, dass ein Absinken des Gasleitungsdruckes unter dem Brennkammerdruck unter allen Umständen zu vermeiden ist. Würde der Gasleitungsdruck unter den Brennkammerdruck fallen, so wird durch Flammenrückschlag in die Gaszuleitung die Betriebssicherheit der gesamten Brennstoffversorgung gefährdet. Zumindest könnten Heißgase in das Brennstoffzuleitungssystem eindringen, wodurch die Brennstoffzufuhr vollständig zum Erliegen kommt und die Brennerflamme erlischt. In diesem Fall fällt die Gasturbinenanlage für einen beträchtlichen Zeitraum zur Stromerzeugung aus, zumal ein erneutes Hochfahren der Anlage bis zum Erreichen einer geforderten Nennlast umfangreiche und zeitaufwendige Maßnahmen erfordert.

Aus den genannten Gründen ist daher dafür Sorge zu tragen, die Folgen des mit dem Absinken des Gasleitungsdruckes unter den Brennkammerbetriebsdruck zu vermeiden.

Um Gasturbinenanlagen vor den Folgen eines unvorhergesehenen Druckabfalls in der Gaszuführungsleitung zu schützen, sind sehr strenge Betriebsgrenzen festgelegt worden, bei deren Überschreiten, respektive im Falle eines Druckabfalls in einer Gaszuführleitung, bei Unterschreiten eines Mindestgasdruckwertes automatisch eine Schutzmaßnahme eingeleitet wird, nämlich eine unverzügliche Ablastung der Gasturbine durch Reduzierung der Brennstoffzufuhr derart, dass die Gasturbinenanlage vollständig zurückgefahren bzw. abgeschaltet wird. Zwar dient diese Maßnahme dem Schutz vor irreversiblen Schäden an einzelnen Gasturbinenkomponenten, insbesondere all jenen, die am Verbrennungsprozess beteiligt sind, doch ist ein vollständiges Ablasten der Gasturbinenanlage stets mit einer erheblichen Reduzierung der wirtschaftlichen Verfügbarkeit verbunden, wie eingangs ausgeführt.

Ein Verfahren zum Betreiben einer Gasturbinenanlage gemäß dem Stand der Technik ist aus Dokument DE 4211681 bekannt.

### Darstellung der Erfindung

Es besteht daher die Aufgabe ein Verfahren zum Betrieb einer Wärmekraftmaschine, insbesondere zum Betrieb einer Gasturbinenanlage, durch die letztlich elektrische Energie zur Einspeisung in ein Stromnetz erzeugbar ist, derart anzugeben, dass die Verfügbarkeit der Wärmekraftmaschine verbessert werden soll, d.h. insbesondere in Fällen in denen der Gasleitungsdruck im Brennstoffversorgungssystem absinkt, gilt es nach alternativen Regelmechanismen zu suchen, die nicht notwendigerweise zu einer Notabschaltung der gesamten Wärmekraftmaschine führen. Darüber hinaus gilt es jedoch ebenso die hohen Sicherheitsstandards, die an eine in Betrieb befindliche Wärmekraftmaschine gestellt werden, uneingeschränkt zu erfüllen.

Der allgemeine Erfindungsgedanke bezieht sich grundsätzlich auf alle Wärmekraftmaschinen, bei denen durch Verbrennen gasförmigen Brennstoffes innerhalb einer Brennkammer Heißgase entstehen, durch die eine Rotationseinheit angetrieben wird, deren Rotationsenergie in eine weitere Energieform, vorzugsweise in elektrische Energie, umgewandelt wird. Hierbei repräsentiert die der Rotationseinheit innewohnende Rotationsenergie dem sog. Lastzustand der Wärmekraftmaschine, der durch Regelung der Menge des der Verbrennung zugeführten gasförmigen Brennstoffes eingestellt und als äquivalente Größe für die in ein Stromversorgungsnetz eingespeiste elektrische Energie angesehen werden kann. Je nach im Stromnetz vor herrschenden Energiebedarf ist der Lastzustand durch Regelung der Brennstoffzufuhr entsprechend anzupassen.

Ohne den allgemeinen Erfindungsgedanken in Bezug auf die Betriebsweise gattungsgemäßer Wärmekraftmaschinen einzuschränken, stellen die weiteren Ausführungen auf eine zur elektrischen Energieerzeugung ausgelegte Gasturbinenanlage ab, die repräsentativ für die in Rede stehende Wärmekraftmaschine anzusehen ist.

Das erfindungsgemäße Verfahren gemäß dem Oberbegriff des Patentanspruches 1 sieht grundsätzlich eine aktive Regelung des Lastzustandes einer Gasturbinenanlage vor, die nicht nur, wie bei den bisher in Betrieb befindlichen Gasturbinenanlage ausschließlich durch den im Stromnetz vorhandenen Bedarf an elektrischer Energie bestimmt wird, sondern zusätzlich durch den aktuell im Gasversorgungssystem vorherrschenden Gasdruck. Im Besonderen wird der aktiven Regelung des Lastzustandes der Gasturbinenanlage das Verhältnis aus dem aktuellen Gasdruck in der Gaszuleitung und zumindest einem mit dem aktuellen, vom Lastzustand abhängigen Brennkammerdruck äquivalenten Druckniveau zugrunde gelegt.

Im Einzelnen lässt sich das erfindungsgemäße Verfahren wie folgt beschreiben:

In an sich bekannter Weise wird die Gasturbinenanlage bei einem Lastzustand betrieben, der sich letztlich durch den nutzerseitigen Bedarf an elektrischer Energie bestimmt, sofern der gasförmige Brennstoff durch eine Gasleitung unter einem Gasdruck $p_{Gas}$ zur Einspeisung in die Brennkammer zur Verfügung gestellt wird, der stets über dem aktuellen, vom jeweiligen Lastzustand abhängigen Brennkammerinnendruck $p_{system\ requirement}$ liegt.

Ausgehend von dem durch den Verbrennungsvorgang sich innerhalb der Brennkammer ausbildenden Brennkammerinnendruck $p_{system\ requirement}$ wird ein gegenüber dem Brennkammerinnendruck erhöhter Referenzdruck $p_{action-limit}$ definiert, der gleichsam dem Brennkammerinnendruck$_{system-requirement}$ vom Lastzustand abhängt und vorzugsweise durch einen konstant vorgebbaren Druckunterschied über dem systembedingten Brennkammerinnendruck $p_{system-requirement}$ liegt.

Um den hohen Sicherheitsstandards zu genügen und diese überdies für das erfindungsgemäße Verfahren zu verschärfen wird als einschränkendes Kriterium für den Normalbetrieb einer, in einem durch die stromnetzseitigen Anforderungen bestimmten Lastzustand befindlichen Gasturbinenanlage zusätzlich gefordert: $p_{Gas} > p_{action\ limit}$, d.h. die für den Verbrennungsvorgang erforderliche Brennstoffzufuhr wird in Abhängigkeit des netzseitigen Energiebedarf bestimmt, durch den letztlich der Lastzustand der Gasturbinenanlage festgelegt wird, sofern der Gasdruck $p_{Gas}$ stets über einem lastabhängigen Referenzdruckniveau $p_{action\ limit}$ liegt, das wiederum über dem Brennkammerdruck $p_{system\ requirement}$ liegt.

Befindet sich die Gasturbinenanlage in einem Ausgangslastzustand, bei dem der Gasleitungsdruck $p_{Gas}$ aus welchen Gründen auch immer absinkt und den im Ausgangslastzustand vorgegebenen Druckwert $p_{action\ limit}$ erreicht, so erfolgt eine sog. Standard-Ablastung, bei der die dem Verbrennungsvorgang zugeführte Menge an gasförmigem Brennstoff unter Vorgabe einer vom jeweiligen Typ der Gasturbinenanlage abhängigen Brennstoffdrosselrate reduziert wird.

Durch diese Maßnahme wird automatisch die Last, die im Ausgangslastzustand vorherrscht reduziert, wodurch automatisch der systembedingte Brennkammerdruck abnimmt.

Da das vom Lastzustand abhängige Referenzdruckniveau $p_{action\ limit}$ stets über dem ebenso vom Lastzustand abhängigen systembedingten Brennkammerdruck $p_{system\ requirement}$ liegt, ermöglicht der zwischen beiden Druckniveaus vorgesehene Druckunterschied eine Art Pufferbereich, durch den das weitere Verhalten des in der Gaszuleitung vorherrschenden Gasdruckes $p_{Gas}$, insbesondere im Verhältnis zu dem vom Lastzustand abhängigen Referenzdruck $p_{action\ limit}$ beobachtet werden kann, bevor eine weitere Massnahme, wie bspw. eine Notabschaltung eingeleitet wird.

So sieht das erfindungsgemäße Verfahren in Abhängigkeit eines sich bei Verringerung der Last ausbildenden Druckverhältnisses zwischen dem Gasdruck $p_{Gas}$ und dem lastabhängigen Referenzdruck $p_{action\ limit}$ unter Zugrundelegung eines Entscheidungskriteriums entweder vor, die Standard-Ablastung zu beenden und die Gasturbinenanlage wieder in den Ausgangslastzustand zurückzuführen, eine vollständige Not-Ablastung durchzuführen, bei der die Brennstoffreduzierung rapider erfolgt als im Falle der Standard-Ablastung, oder eine Umschaltung der Brennstoffversorgung auf eine andere Brennstoffart zu veranlassen, sofern die Gasturbinenanlage über eine duale Brennstoffversorgung verfügt.

Führt eine durch Druckabfall des Gasdruckes $p_{Gas}$ auf das Druckniveau $p_{action\ limit}$ erforderlich gewordene Standard-Ablastung zu einer Stabilisierung des Gasdruckes $p_{Gas}$, wobei durch die Lastreduzierung der Gasdruck $p_{Gas}$ stets größer als der Referenzdruck $p_{action\ limit}$ bleibt, so kann unter Zugrundelegung einer gezielten Auflastung die Gasturbinenanlage wieder in ihren Ausgangslastzustand zurück überführt werden.

Mit Hilfe des erfindungsgemäßen Verfahrens ist es somit möglich, Gasturbinenanlagen auch bei reduziertem Gasdruck $p_{Gas}$ sicher zu betreiben, ohne dabei eine Notabschaltung einzuleiten, wodurch die Verfügbarkeit und letztlich die Wirtschaftlichkeit von Gasturbinenanlagen erheblich verbessert werden kann.

Nur in Fällen, in denen der Gasdruck $p_{Gas}$ trotz Standard-Ablastung weiter abfällt, sind Notabschaltungen zur Gewährleistung der Betriebssicherheit und der Vermeidung irreversibler Schäden unumgänglich. In Fällen, in denen Gasturbinenanlagen über eine duale Brennstoffversorgung verfügen, d.h. sowohl mit gasförmigen als auch mit flüssigem Brennstoff betrieben werden können, kann alternativ zur Notabschaltung eine Umschaltung der Brennstoffversorgung von Gasauf Flüssigbrennstoffzufuhr vorgenommen werden.

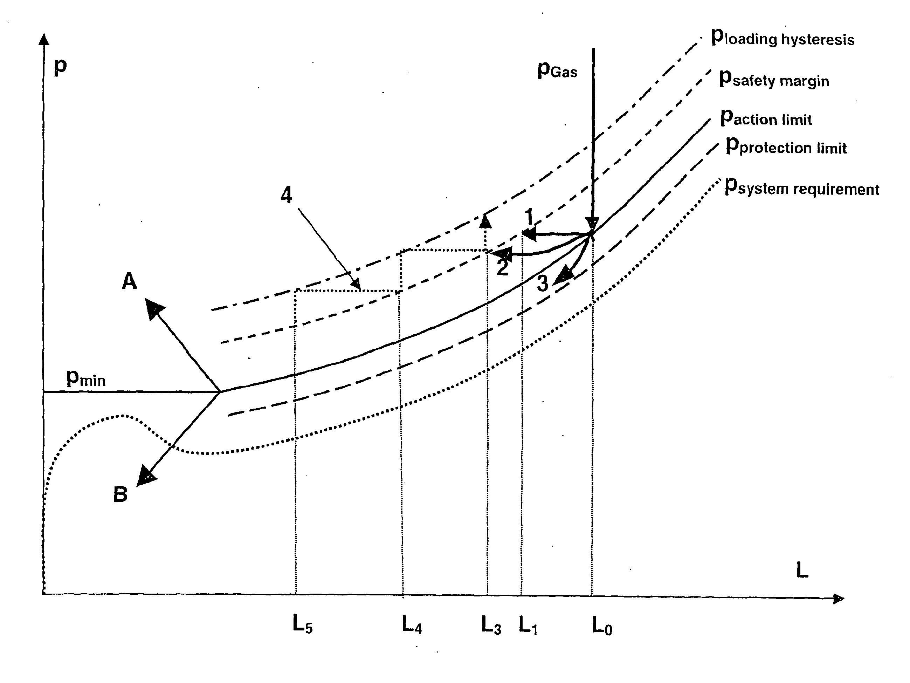

Das erfindungsgemäße Verfahren soll anhand eines in der einzigen Figur dargestellten Ausführungsbeispieles beschrieben werden. Die Figur zeigt ein p/L-Diagramm, in dem längs der Ordinate der Druck p und längs der Abszisse der Lastzustand L angetragen sind.

Grundsätzlich gilt es den Gasdruck $p_{Gas}$ stets größer als den sich in Abhängigkeit des Lastzustandes L ausbildenden, systembedingten Brennkammerdruck $p_{system-requirement}$ zu halten, will man verhindern, dass die eingangs erläuterten Konsequenzen, die unweigerlich zu einer irreversiblen Beschädigung aller am Verbrennungsprozess beteiligten Komponenten führen, eintreten.

Beim Zünden einer Gasturbinenanlage ist dafür Sorge zu tragen, dass der Gasdruck für die Brennstoffzufuhr einen Mindestgasdruck $p_{min}$ aufweist, der deutlich über dem systembedingten Brennkammerinnendruck $p_{system-requirement}$ im Bereich des unteren Lastzustandes liegt. Kann dieser Forderung nicht nachgekommen werden, so wird aus Sicherheitsgründen der Zündfunke für die Zündung eines sich innerhalb des Brenners ausbildenden Brennstoffluftgemisches nicht freigegeben.

Ausgehend von dem Mindestgasdruck $p_{min}$ im unteren Lastbereich schließt sich in den Bereich höherer Lasten L eine Druckreferenzlinie $p_{action\ limit}$ an, die proportional zum Brennkammerdruck $p_{system-requirement}$ ansteigt und unabhängig vom jeweiligen Lastzustand jeweils größer als $p_{system-requirement}$ gewählt ist.

Ferner sind drei weitere Drucklinien in dem in der Figur dargestellten Diagramm eingezeichnet, im Einzelnen sind dies: $p_{protection\ limit}$, $p_{safety\ margin}$ und $p_{loading\ hysteresis}$. Die zusätzlichen drei Drucklinien verlaufen alle weitgehend parallel zur Referenzdrucklinie $p_{action\ limit}$, wobei die Referenzdrucklinie $p_{action\ limit}$ im mittleren und höheren Lastbereich in der nachstehenden Weise aus dem lastabhängigen, systembedingten Brennkammerinnendruck $p_{system-requirement}$ hervorgeht:

$$p_{action\ limit} = p_{system-requirement} \cdot a, \text{ mit } 1{,}2 \leq a \leq 1{,}5, \text{ vorzugsweise } a = 1{,}35.$$

Bezüglich der zusätzlich in der Diagrammdarstellung vorgesehenen Drucklinien für $p_{protection\ limit}$, $p_{safety\ margin}$ sowie $p_{loading\ hysteresis}$ gelten vorzugsweise die nachfolgenden Bedingungen:

$$p_{safety\ margin} = p_{system-requirement} \cdot a + 1bar,$$

$$p_{loading\ hysteresis} = p_{system-requirement} \cdot a + 1{,}3\ bar\ sowie$$

$$p_{protection\ limit} = p_{system-requirement} \cdot a - 0{,}3\ bar.$$

Je nach Gasturbinenart können, die in den obigen Beziehungen gewählten Faktoren unterschiedlich gewählt werden.

Der Normalbetrieb einer Gasturbinenanlage erfolgt unter ausreichend hohem Gasdruck $p_{Gas}$, der in jedem Lastzustand L stets höher liegt als der vom Lastzustand abhängige Referenzdruck $p_{action\ limit}$. Im normalen Betriebszustand gilt daher stets:

$$p_{Gas} > p_{action\ limit}.$$

Sollte der Gasdruck $p_{Gas}$ jedoch bei einem beliebig gewählten Ausgangslastzustand $L_0$ absinken und den Druckwert $p_{action\ limit}$ im Ausgangslastzustand $L_0$ erreichen, so wird die Gasturbinenanlage automatisch unter Zugrundelegung einer standardisierten Brennstoffdrosselung mit einer von der jeweiligen Gasturbinenanlage abhängigen Drosselrate $r_1$ abgelastet.

Im Falle der Standard-Ablastung können grundsätzlich die folgenden Fälle voneinander unterschieden werden:

4

Fall 1 (siehe Pfeil 1 im Diagramm)

Durch die Standard-Ablastung verbleibt der Gasdruck $p_{Gas}$ weitgehend konstant, so dass sich im Wege der Lastreduzierung bei Erreichen eines geringeren Lastzustandes $L_1$ eine relative Drucküberhöhung des Gasdruckes $p_{Gas}$ gegenüber dem Druckwert $p_{action\ limit}$ im Lastzustand $L_1$ einstellt mit: $p_{Gas} = p_{safety\ margin}$ ($L_1$).

Die Drucklinie $p_{safety\ margin}$ dient als ein stets über der Referenzdrucklinie $p_{action\ limit}$ liegendes Sicherheitsdruckniveau. Gleicht sich der Gasdruck $p_{Gas}$ durch reduzierte Brennstoffzufuhr in einem reduzierten Lastzustand $L_1$ dem Sicherheitsdruckniveau $p_{safety\ margin}$ an, so wird die Standard-Ablastung beendet. Verbleibt der Gasdruck $p_{Gas}$ auch nach der Standard-Ablastung konstant und behält das Druckniveau $p_{safety\ margin}$ im Lastzustand $L_1$ bei, so kann im Rahmen eines Standard-Lastaufbaus die Gasturbinenanlage wieder in den Ausgangslastzustand $L_0$ überführt werden.

Sinkt hingegen der Gasdruck $p_{Gas}$ unmittelbar nach Erreichen des Druckwertes $p_{safety\ margin}$ im Lastzustand $L_1$ nach Beendigung der Standard-Ablastung erneut ab und nähert sich im Lastzustand $L_1$ dem Referenzdruckniveau $p_{action\ limit}$, so erfolgt ein wiederholtes Standardablasten auf einen weiter reduzierten Lastzustand $L_2$ (nicht im Diagramm dargestellt). Gleicht sich der Gasdruck $p_{Gas}$ im reduzierten Lastzustand $L_2$ dem auf diesem Lastniveau herrschenden Sicherheitsdruck $p_{saftey\ margin}$ an, so wird die Standard-Ablastung aufs neue beendet. Stabilisiert sich der Gasdruck $p_{Gas}$, so wird mit einem Lastaufbau vom Lastzustand $L_2$ auf den Ausgangslastzustand $L_0$ begonnen.

Führen die vorstehend beschriebenen Standard-Ablastungsmaßnahmen jedoch nicht zu dem erwünschten Ergebnis hinsichtlich einer Gasdruckstabilisierung mit nachfolgender Überführung der Gasturbinenanlage in den Ausgangslastzustand $L_0$ zurück, so gelangt der Gasdruck durch schrittweises Wiederholen der vorstehenden Prozedur auf das Minimumdruckniveau $p_{min}$, von dem aus eine weitere Ablastung aus Gründen der Schadensvermeidung nicht mehr möglich ist.

In diesem Fall bleiben lediglich zwei Alternativen A und B übrig, nämlich entweder eine Notabschaltung der Gasturbinenanlage, um ein weiteres Absinken des Gasdruckes unter den systembedingten Brennkammerinnendruck $p_{system-requirement}$ zu verhindern (Fall B), oder eine Umschaltung auf eine alternative Brennstoffart (Fall A) bspw. eine Befeuerung der Brennkammer anstelle von mit gasförmigem Brennstoff mit Flüssigbrennstoff. Der Fall A ist jedoch lediglich, wie bereits erwähnt, bei dualen Brennersystemen möglich.

Das vorstehend geschilderte Szenario beschreibt den Fall eines langsam erfolgenden Druckverlustes in der Brennstoffzuleitung, bei dem zumeist eine Brennstoffdrosselung im Wege einer Standard-Ablastung zu einem gleich bleibenden Gasdruck $p_{Gas}$ führt, der sich bei Erreichen des Sicherheitsdruckniveaus $p_{safety\ margin}$ in einem reduzierten Lastzustand $L_1$ wieder stabilisiert und die Möglichkeit einer Überführung der Gasturbinenanlage im Ausgangslastzustand eröffnet.

Fall 2 (siehe Pfeil 2 im Diagramm)

Tritt hingegen ein deutlicher und schneller Druckabfall im Gasdruck $p_{Gas}$ auf, so wird der Referenzdruck $p_{action\ limit}$ im Ausgangslastzustand $L_0$ relativ rasch erreicht. In gleicher Weise erfolgt automatisch die vorstehend beschriebene Standard-Ablastung durch Drosselung der Brennstoffzufuhr. Zwar verbleibt der Gasdruck $p_{Gas}$ in einem derartigen Fall trotz Standard-Ablastung nicht konstant, sondern fällt dynamisch weiter ab, dies jedoch langsamer als der durch die Standard-Ablastung abfallende Referenzdruckwert $p_{action\ limit}$. Auch in diesem Fall gilt während der gesamten Standard-Ablastung stets $p_{Gas} > p_{action\ limit}$ (L). Bei Erreichen des Sicherheitsgasdruckes $p_{safety\ margin}$ in einem stark abgelasteten Lastzustand $L_3$ wird gleichsam wie im vorstehend geschilderten Fall die Brennstoffdrosselung im Wege der Standardablastung beendet. Im Falle einer Gasdruckstabilisierung im Lastzustand $L_3$ kann der Lastzustand $L_3$ im Rahmen eines Standard-Lastaufbaus wieder in den Ausgangslastzustand $L_0$ überführt werden. Auf den Standard-Lastaufbau wird an einer weiter nachfolgenden Stelle näher eingegangen.

Fall 3 (siehe Pfeil 3 im Diagramm)

Sollte bei einem starken Abfall des Gasdruckes $p_{Gas}$ auf das Referenzdruckniveaus $p_{action\ limit}$ im Ausgangslastzustand $L_0$ die automatisch eingeleitete Standard-Ablastung nicht zu einer gewünschten Stabilisierung des Druckniveaus innerhalb der Gasleitung führen und unterschreitet der Gasdruck $p_{Gas}$ trotz Standard-Ablastung das Referenzdruckniveau $p_{action\ limit}$, so wird eine Notabschaltung der Gasturbinenanlage unvermeidbar, im Falle einer Druckreduzierung des Gasdruck $p_{Gas}$ auf ein über dem Brennkammerdruck $p_{system-requirement}$ liegendes Schutzdruckniveau $p_{protection\ limit}$.

In einem derartigen Fall ist eine Notabschaltung aus Gründen der Vermeidung von irreversiblen Systembeschädigungen unvermeidbar. Alternativ zur Notabschaltung kann im Falle einer dualen Brennstoffversorgung der Gasturbinenanlage von der Versorgung des Verbrennungsprozesses mit gasförmigem Brennstoff auf Flüssigbrennstoffbetrieb umgeschaltet werden.

Im Falle einer Notablastung wird die Brennstoffzufuhr mit einer weitaus größeren Drosselrate $r_2$ durchgeführt,

als im Falle einer Standard-Ablastung. Typischer Weise beträgt die Drosselrate $r_2$ im Falle einer Notablastung wenigstens das 6-fache, vorzugsweise wenigstens das 10-fache der Drosselrate $r_1$, die bei der Standard-Ablastung eingesetzt wird.

In den vorstehend beschriebenen Fällen, in denen durch gezielte Standard-Ablastung der Gasdruck $p_{Gas}$ auf dem jeweils vom reduzierten Lastniveau abhängigen Sicherheitsdruckniveau $p_{safety\ margin}$ stabilisiert werden kann, d. h. der Gasdruck $p_{Gas}$ verbleibt über eine vorgebbare Zeitspanne von wenigstens 1 Minute unverändert stabil bei konstanter Brennstoffzufuhr, gilt es die Gasturbinenanlage auf den ursprünglichen Ausgangslastzustand $L_0$ wieder zurückzuführen. Dies erfolgt, wie bereits erwähnt im Rahmen eines Standard-Lastaufbaus, der, wie aus der Diagrammdarstellung zu entnehmen ist (siehe gepunkteter Linienzug 4), stufenweise erfolgt. Zunächst sei angemerkt, dass der Ausgangslastzustand $L_0$, bei dem der Druckabfall in der Brennstoffzufuhrleitung auftrat, im System gespeichert wird, so dass der Ausgangslastzustand nach entsprechender Standard-Ablastung gezielt wieder hergestellt werden kann. Bezug nehmend auf die Diagrammdarstellung sei angenommen, dass der im Wege der Standard-Ablastung eingenommene reduzierte Lastzustand $L_5$ sei, an dem der Gasruck $p_{Gas}$ den Sicherheitsdruck $p_{safety\ margin}$ eingenommen hat und bei gleich bleibendem Lastzustand $L_5$ auf das Druckniveau $p_{loading\ hysteresis}$ ansteigt, für das gilt: $p_{loading\ hysteresis} > p_{safety\ margin}$, wobei das Druckniveau $p_{Loading\ Hysteresis}$ stest größer dem Sicherheitsdruckniveau $p_{Safety\ Margin}$ ist.

Bei Erreichen des Druckniveaus $p_{loading\ hysteresis}$ erfolgt ein Standard-Lastaufbau durch erhöhte Brennstoffzufuhr mit einer von der Gasturbinenanlage abhängigen Brennstoffzufuhrrate, die vorzugsweise zeitlich konstant gewählt ist. Während des Standard-Lastaufbaus bleibt der Gasdruck $p_{Gas}$ typischer Weise konstant, wobei bei Erreichen des Sicherheitsdruckniveaus $p_{safety\ margin}$ im Lastzustand $L_4$ der Standard-Lastaufbau unterbrochen wird. Wieder erfolgt ein Anstieg des Gasdruckes $p_{Gas}$ im erhöhten Lastzustand $L_4$ bis das Druckniveau $p_{loading\ hysteresis}$ im Lastzustand $L_4$ erreicht ist. Erneut wird die Brennstoffzufuhr erhöht, so dass im höheren Lastzustand $L_3$ das Sicherheitsdruckniveau $p_{safety\ margin}$ erreicht ist. Der schrittweise durchgeführte Standard-Lastaufbau wird sooft wiederholt, bis der Ausgangslastzustand $L_0$ erreicht ist.

Mit Hilfe des erfindungsgemäßen Verfahrens ist es möglich, die Verfügbarkeit von Gasturbinenanlagen zu verbessern und die Anfälligkeit hinsichtlich Druckschwankungen innerhalb der Brennstoffzuführleitungen deutlich zu reduzieren. Notabschaltungen werden mit dem beschriebenen Verfahren nur in den seltenen Fällen erforderlich, sofern die Wärmekraftmaschine ausschließlich mit gasförmigen Brennstoff befeuert wird und der Druckabfall in der Gasleitung trotz Standard-Ablastung nicht stabilisierbar ist.

Insbesondere in Ländern und Regionen, in denen die Versorgung von gasförmigen Brennstoff Schwankungen unterworfen ist, bietet das Verfahren eine zuverlässige Betriebsweise von gasbefeuerten Wärmekraftmaschinen, insbesondere von Gasturbinenanlagen.

**Patentansprüche**

1. Verfahren zum Betreiben einer Gasturbinenanlage zur Erzeugung elektrischer Energie, bei der durch Verbrennen gasförmigen Brennstoffes innerhalb einer Brennkammer unter Ausbildung von Heißgasen eine Rotationseinheit, vorzugsweise wenigstens eine Gasturbinenstufe, angetrieben wird, wobei ein Lastzustand (L) durch Regelung der Menge des der Verbrennung zugeführten gasförmigen Brennstoffes eingestellt wird, wobei
die Wärmekraftmaschine bei einem Lastzustand (L) betrieben wird, sofern der gasförmige Brennstoff durch eine Gasleitung unter einem Gasdruck $p_{Gas}$ der Verbrennung zugeführt wird, für den gilt

$$p_{Gas} > p_{action\ limit}(L),$$

wobei $p_{action\ limit}$ (L) einen Druckwert darstellt, der von einem sich vom Lastzustand (L) der Wärmekraftmaschine im Bereich der Brennkammer einstellenden Systeminnendruck $p_{system\ requirement}$ (L) abhängt für den gilt:

$$p_{action\ limit}(L) > p_{system\ requirement}(L),$$

**dadurch gekennzeichnet,**
**dass** ausgehend von einem Ausgangslastzustand $L_0$ bei einem Druckverlust in der Gasleitung, durch den der Gasdruck $p_{Gas}$ auf den Druckwert $p_{action\ limit}(L_0)$ absinkt, eine Standard-Ablastung durch Reduzierung der der Verbrennung zugeführten Menge an gasförmigen Brennstoff durchgeführt wird, und
**dass** in Abhängigkeit eines sich bei Verringerung des Last ausbildenden Druckverhältnisses zwischen $p_{Gas}$ und $p_{action\ limit}(L)$ unter Zugrundelegung eines Entscheidungskriteriums entweder

i) die Standard-Ablastung beendet wird und die Wärmekraftmaschine auf ihren Ausgangslastzustand überführt wird oder

ii) eine vollständige Not-Ablastung herbeigeführt wird, bei der die Brennstoffreduzierung rapider durchgeführt wird als bei der Standard-Ablastung, oder

iii) eine Umschaltung der Brennstoffversorgung auf eine andere Brennstoffart erfolgt.

2. Verfahren nach Anspruch 1,
   **dadurch gekennzeichnet, dass** für den Fall $p_{Gas} = p_{action\ limit}(L_0)$ die Standard-Ablastung zu einem Gasdruck $p_{Gas}$ führt, der bei einem verringerten Lastzustand $L_1$ einen Druckwert $p_{safety\ margin}(L_1)$ annimmt, für den gilt:

$$p_{safety\ margin}(L_1) > p_{action\ limit}(L_1)$$

die Standard-Ablastung beendet und die Wärmekraftmaschine durch Erhöhung der Brennstoffzufuhr in den Ausgangslastzustand $L_0$ überführt wird.

3. Verfahren nach Anspruch 1,
   **dadurch gekennzeichnet, dass** für den Fall $p_{Gas} = p_{action\ limit}(L_0)$ die Standard-Ablastung zu einem Absinken des Gasdrucks $p_{Gas}$ auf einen Druckwert $p_{protection\ limit}(L_2)$ bei einem verringerten Lastzustand $L_2$ führt, mit $p_{system\ requirement}(L_2) < p_{protection\ limit}(L_2) < p_{action\ limit}(L_2)$, die vollständige Not-Ablastung oder die Umschaltung der Brennstoffzufuhr auf eine andere Brennstoffart erfolgt.

4. Verfahren nach einem der Ansprüche 1 bis 3,
   **dadurch gekennzeichnet, dass** die Standard-Ablastung durch Drosselung der Brennstoffzufuhr durchgeführt wird mit einer Drosselrate $r_1$, und
   dass die Not-Ablastung mit einer Drosselrate $r_2$ mit $r_2 \geq 6 \cdot r_1$.

5. Verfahren nach Anspruch 2,
   **dadurch gekennzeichnet, dass** in Fällen eines wiederholten Abfallens des Gasdruckes $p_{Gas}$ nach Erreichen von $p_{safety\ margin}(L)$ auf einen Druckwert $p_{action\ limit}(L)$ die im Anspruch 2 beschriebene Maßnahme wiederholt wird, und dass im Falle eines wiederholten Durchführens der vorstehenden Maßnahme der Gasdruck $p_{Gas}$ einen Mindestdruckwert $p_{min}$ unterschreitet, entweder die vollständige Not-Ablastung durchgeführt wird oder eine Umschaltung der Brennstoffversorgung auf eine andere Brennstoffart erfolgt.

6. Verfahren nach einem der Ansprüche 1 bis 5,
   **dadurch gekennzeichnet, dass** die Überführung der Wärmekraftmaschine in den Ausgangslastzustand $L_0$ erfolgt, nachdem der sich bei $p_{Gas} = p_{safety\ margin}(L)$ einstellende Lastzustand stabilisiert hat.

7. Verfahren nach einem der Ansprüche 1 bis 6,
   **dadurch gekennzeichnet, dass** die Überführung der Wärmekraftmaschine in den Ausgangslastzustand $L_0$ gemäß eines Standard-Lastaufbaus durchgeführt wird sofern gilt:

$$p_{Gas} \geq p_{loading\ hysteresis}$$

und

$$p_{loading\ hysteresis} > p_{action\ limit},$$

und
dass der Standard-Lastaufbau mit einer von der jeweiligen Wärmekraftmaschine abhängigen Rate von Brennstoffzufuhr, vorzugsweise mit einer zeitlich konstanten Rate, durchgeführt wird.

8. Verfahren nach einem der Ansprüche 2, 4 bis 7,

**dadurch gekennzeichnet, dass** die Überführung der Wärmekraftmaschine in den Ausgangslastzustand $L_0$ durch stufenweises Erhöhen des Lastzustandes (L) derart erfolgt, dass im Falle $p_{Gas} \geq p_{loading\ hysteresis}(L_4)$, mit $p_{loading\ hysteresis}(L_4) > p_{action\ limit}(L_4)$, bei einem Lastzustand $L_4$ eine Auflastung der Wärmkraftmaschine durchgeführt wird bis $P_{Gas}$ dem Druckwert $p_{safety\ margin}(L_3)$ bei einem höheren Lastzustand $L_3$ entspricht, steigt im Weiteren $p_{Gas}$ auf dem gleich bleibenden Lastzustand $L_3$ an und erreicht den Druckwert $p_{loading\ hysteresis}(L_3)$, so wird die vorstehende Auflastung sooft wiederholt bis der Ausgangslastzustand $L_0$ erreicht wird.

## Claims

1. Method of operating a gas turbine power plant for the generation of electrical energy, in which a rotary unit, preferably at least one gas turbine stage, is driven by burning gaseous fuel inside a combustion chamber, with hot gases being formed, a load set point (L) being set by regulating the quantity of gaseous fuel fed to the combustion process, the thermal power plant being operated at a load set point (L), provided the gaseous fuel is fed to the combustion process through a gas line at a gas pressure $p_{gas}$, with

$$p_{gas} > p_{action\ limit}\ (L),$$

where $p_{action\ limit}$ (L) represents a pressure value which depends on a system internal pressure $p_{system\ requirement}$ (L) set in the region of the combustion chamber by the load set point (L) of the thermal power plant, with

$$p_{action\ limit}\ (L) > p_{system\ requirement}\ (L),$$

**characterized**
**in that,** starting from an initial load set point $L_0$, during a pressure loss in the gas line, as a result of which the gas pressure $p_{gas}$ drops to the pressure value $p_{action\ limit}$ ($L_0$), standard deloading is carried out by reducing the quantity of gaseous fuel fed to the combustion process, and in that, depending on a pressure ratio between $p_{gas}$ and $p_{action\ limit}$ (L) forming during reduction of the load, on the basis of a decision criterion, either

    i) the standard deloading is ended and the thermal power plant is returned to its initial load set point, or
    ii) complete emergency load shedding is carried out, during which the fuel reduction is carried out more rapidly than during the standard deloading, or
    iii) the fuel supply is changed over to another type of fuel.

2. Method according to Claim 1, **characterized in that,** for the case $p_{gas} = p_{action\ limit}$ ($L_0$), the standard deloading leads to a gas pressure $p_{gas}$ which assumes a pressure value $p_{safety\ margin}$ ($L_1$) at a reduced load set point $L_1$, for which:

$$p_{safety\ margin}\ (L_1) > p_{action\ limit}\ (L_1),$$

the standard deloading is ended and the thermal power plant is returned to the initial load set point $L_0$ by increasing the fuel feed.

3. Method according to Claim 1, **characterized in that,** for the case $p_{gas} = p_{action\ limit}$ ($L_0$), the standard deloading leads to a drop in the gas pressure $p_{gas}$ to a pressure value $p_{protection\ limit}$ ($L_2$) at a reduced load set point $L_2$, with $p_{system\ requirement}$ ($L_2$) < $p_{protection\ limit}$ ($L_2$) < $P_{action\ limit}$ ($L_2$), the complete emergency load shedding or the changeover of the fuel feed to another type of fuel is effected.

4. Method according to one of Claims 1 to 3, **characterized in that** the standard deloading is carried out by throttling the fuel feed at a throttle rate $r_1$, and **in that** the emergency load shedding is carried out at a throttle rate $r_2$, with $r_2 \geq 6\ r_1$.

5. Method according to Claim 2, **characterized in that,** in cases where the gas pressure $p_{gas}$ repeatedly drops to a pressure value $p_{action\ limit}$ (L) after $p_{safety\ margin}$ (L) is reached, the measure described in Claim 2 is repeated, and **in that**, in the case where the above measure is carried out repeatedly, the gas pressure $p_{gas}$ falls below a minimum pressure value $p_{min}$, either the complete emergency load shedding is effected or the fuel supply is changed over to another type of fuel.

6. Method according to one of Claims 1 to 5, **characterized in that** the thermal power plant is returned to the initial load set point $L_0$ once the load set point set at $p_{gas} = p_{safety\ margin}$ (L) has stabilized.

7. Method according to one of Claims 1 to 6, **characterized in that** the thermal power plant is returned to the initial load set point $L_0$ according to a standard load build-up, provided:

$$p_{gas} \geq p_{loading\ hysteresis}$$

and

$$p_{loading\ hysteresis} > p_{action\ limit}$$

and
**in that** the standard loading is carried out at a fuel feed rate depending on the respective thermal power plant, preferably at a rate which is constant with respect to time.

8. Method according to one of Claims 2, 4 to 7, **characterized in that** the thermal power plant is returned to the initial load set point $L_0$ by step-by-step increase in the load set point (L) in such a way that, in the case where $p_{gas} \geq p_{loading\ hysteresis}$ ($L_4$), with $p_{loading\ hysteresis}$ ($L_4$) > $p_{action\ limit}$ ($L_4$) at a load set point $L_4$, a loading of the thermal power plant is carried out until $p_{gas}$ corresponds to the pressure value $p_{safety\ margin}$ ($L_3$) at a higher load set point $L_3$, and if $p_{gas}$ furthermore increases at the uniform load set point $L_3$ and reaches the pressure value $p_{loading\ hysteresis}$ ($L_3$), the above load build-up is repeated until the initial load set point $L_0$ is reached.

**Revendications**

1. Procédé pour la marché d'une installation de turbines à gaz pour générer de l'énergie électrique, sur laquelle une unité de rotation, de préférence au moins un étage de turbines à gaz, est entraînée par la combustion de combustible gazeux à l'intérieur d'une chambre de combustion en formant des gaz chauds, un état de charge (L) étant régulé par le réglage de la quantité du combustible gazeux amené à la combustion,
le moteur thermique étant marché dans un état de charge (L) dans la mesure où le combustible gazeux est amené par une conduite de gaz sous une pression de gaz $P_{Gas}$ à la combustion, pour laquelle on a

$$P_{Gas} > P_{action\ limit}\ (L),$$

$P_{action\ limit}$ (L) représentant une valeur de pression qui dépend d'une pression intérieure du système $P_{system\ requirement}$ (L) s'ajustant en fonction de l'état de charge (L) du moteur thermique dans la zone de la chambre de combustion, pression pour laquelle on a

$$P_{action\ limit}\ (L) > P_{system\ requirement}\ (L),$$

**caractérisé en ce que,**
à partir d'un état de charge de départ $L_0$ pour une perte de pression dans la conduite de gaz, par laquelle la pression de gaz $P_{Gas}$ descend à la valeur de pression $P_{action\ limit}$ ($L_0$), un balayage standard est effectué par réduction de la quantité de combustible gazeux amené à la combustion, et
**en ce que**, en fonction d'un rapport de pression, se formant en cas de réduction de la charge, entre $P_{Gas}$ et $P_{action\ limit}$ (L) et sur la base d'un critère de décision,

i) la décharge standard est terminée et le moteur thermique est amené à son état de charge de départ, ou

ii) une décharge d'urgence complète est effectuée, lors de laquelle la réduction de combustible est effectuée plus rapidement qu'avec la décharge standard, ou

iii) une commutation de l'alimentation en combustible sur un autre type de combustible intervient.

**2.** Procédé selon la revendication 1,
**caractérisé en ce que,** dans le cas $P_{Gas} = P_{action\ limit}$ ($L_0$), la décharge standard aboutit à une pression de gaz $P_{Gas}$ qui prend pour un état de charge $L_1$ réduite une valeur de pression $P_{safety\ margin}$ ($L_1$) pour laquelle on a :

$$P_{safety\ margin}\ (L_1)\ >\ P_{action\ limit}\ (L_1)$$

la décharge standard est achevée et le moteur thermique est amené dans l'état de charge de départ $L_0$ par augmentation de l'arrivée en combustible.

**3.** Procédé selon la revendication 1,
**caractérisé en ce que** pour le cas $P_{Gas} = P_{action\ limit}$ ($L_0$), la décharge standard aboutit à un abaissement de la pression de gaz $P_{Gas}$ jusqu'à une valeur de pression $P_{protection\ limit}$ ($L_2$) pour un état de charge $L_2$ réduit, avec

$$P_{system\ requirement}\ (L_2)\ <\ P_{protection\ limit}\ (L_2)\ <\ P_{action\ limit}\ (L_2),$$

$_{limit}$ ($L_2$), la décharge d'urgence complète ou la commutation de l'arrivée de combustible sur un autre type de combustible intervient.

**4.** Procédé selon l'une quelconque des revendications 1 à 3,
**caractérisé en ce que** la décharge standard est effectuée par étranglement de l'arrivée de combustible avec un taux d'étranglement $r_1$ et **en ce que** la décharge d'urgence s'effectue avec un taux d'étranglement $r_2$ avec $r_2 \geq 6.r_1$.

**5.** Procédé selon la revendication 2,
**caractérisé en ce que,** dans des cas d'une chute répétée de la pression de gaz $P_{Gas}$, après avoir atteint $P_{safety\ margin}$ (L), à une valeur de pression $P_{action\ limit}$ (L), la mesure décrite dans la revendication 2 est répétée, et **en ce que**, dans le cas d'une application répétée de la mesure susmentionnée, la pression de gaz $P_{Gas}$ passe au-dessous d'une valeur de pression minimale $P_{min}$, la décharge d'urgence complète est effectuée ou une commutation de l'alimentation en combustible sur un autre type de combustible intervient.

**6.** Procédé selon l'une quelconque des revendications 1 à 5,
**caractérisé en ce que** le transfert du moteur thermique dans l'état de charge de départ $L_0$ intervient après que l'état de charge s'établissant pour $P_{Gas} = P_{safety\ margin}$ (L) s'est stabilisé.

**7.** Procédé selon l'une quelconque des revendications 1 à 6,
**caractérisé en ce que** le transfert du moteur thermique dans l'état de charge de départ $L_0$ est effectué selon une structure de charge standard dans la mesure où l'on a :

$$P_{Gas}\ \geq\ P_{loading\ hysteresis}$$

et

$$P_{loading\ hysteresis}\ >\ P_{action\ limit}$$

et
**en ce que** la structure de charge standard est réalisée avec un taux d'arrivée de combustible dépendant du moteur thermique respectif, de préférence avec un taux constant dans le temps.

8. Procédé selon l'une quelconque des revendications 2, 4 à 7,
   **caractérisé en ce que** le transfert du moteur thermique dans l'état de charge de départ $L_0$ s'effectue par l'élévation progressive de l'état de charge (L) de telle sorte que, dans le cas $P_{Gas} \geq P_{loading\ hysteresis}$ ($L_4$), avec $P_{loading\ hysteresis}$ ($L_4$) > $P_{action\ limit}$ ($L_4$), une charge du moteur thermique est effectuée pour un état de charge ($L_4$) jusqu' à ce que $P_{Gas}$ corresponde à la valeur de pression $P_{safety\ margin}$ ($L_3$) pour un état de charge $L_3$ supérieur, et si $P_{Gas}$ continue d'augmenter jusqu'à l'état de charge $L_3$ uniforme et atteint la valeur de pression $P_{loading\ hysteresis}$ ($L_3$), la charge susmentionnée est répétée jusqu'à ce que l'état de charge de départ $L_0$ soit atteint.

$p_{loading\ hysteresis}$

$p_{safety\ margin}$

$p_{action\ limit}$

$p_{protection\ limit}$

$p_{system\ requirement}$

$p_{Gas}$

$p$

$p_{min}$

A

B

1

2

3

4

$L$

$L_0$

$L_1$

$L_3$

$L_4$

$L_5$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4211681